# EUROPÄISCHE PATENTSCHRIFT

(11) **EP 1 586 777 B1**
(45) Veröffentlichungstag und Bekanntmachung des Hinweises auf die Patenterteilung: **03.01.2007**
(21) Anmeldenummer: 04009068.0
(22) Anmeldetag: 16.04.2004
(51) Int. Cl.: F15B 13/00, F15B 21/08

(54) **Proportionalventil-Baukasten und damit hergestelltes Proportionalventil**
Kit for proportional valve and valve assembled therewith
Kit pour vanne proportionnelle et vanne assemblée avec un tel kit.

(43) Veröffentlichungstag der Anmeldung: 19.10.2005
(73) Patentinhaber: Festo AG & Co., 73734 Esslingen (DE)
(72) Erfinder: Gerhartz Jürgen, 73734 Essling (DE); Rehm Michael, 75236 Kämpfelbach (DE); Koch Michael, 71334 Wablingen (DE); Jentschke Michael, 73773 Aichwald (DE); Christiani, Dr. Peter, 72639 Neuffen (DE)
(74) Vertreter: Abel, Martin

(56) Entgegenhaltungen:
- EP-A- 0 962 663
- DE-U- 29 522 027
- US-A- 5 883 785
- US-A1- 2004 003 850
- ACHENBACH H-P: "EIN BAUKASTENSYSTEM FUER PNEUMATISCHE WEGEVENTILE" WERKSTATTSTECHNIK, SPRINGER VERLAG. BERLIN, DE, Bd. 65, Nr. 1, 1975, Seiten 13-17, XP000700264 ISSN: 0340-4544

## Beschreibung

Die Erfindung betrifft einen Baukasten zur Herstellung modular aufgebauter, für die Fluidsteuerung dienender Proportionalventile und bezieht sich ferner auf ein auf Basis eines solchen Baukastens hergestelltes Proportionalventil.

Aus der EP 0603395 B1 geht eine Fluiddruckvorrichtung hervor, die für die Steuerung von Fluidströmen einsetzbar ist und die sich aus einer Vielzahl von Blöcken mit unterschiedlichen Funktionen zusammensetzt. Da die Funktionen der einzelnen Blöcke spezifisch vorgegeben sind, bedarf es zur Realisierung von Fluiddruckvorrichtungen mit voneinander abweichender Funktionalität eines erhöhten Aufwandes an Herstellung und Lagerhaltung.

Die bei der bekannten Fluiddruckvorrichtung eingesetzten Ventile sind elektrisch betätigbare Schaltventile, wobei der Schaltzustand beispielsweise unter Verwendung eines Drucksensors bestimmt wird.

Nicht wenige Anwendungen in der Fluidtechnik erfordern den Einsatz sogenannter Proportionalventiltechnik. Anders als bei einer Schaltventiltechnik, die ausschließlich für eine Auf-Zu-Fluidsteuerung geeignet ist, ermöglicht die Proportionalventiltechnik auf der Basis einer stufenlosen Positionierung des Ventilgliedes mittels eines geeigneten Antriebssatzes, beispielsweise elektromagnetischer Art, eine variable Fluidsteuerung zur Versorgung eines Verbrauchers mit unterschiedlichen Drücken oder Durchflüssen bzw. Strömungsraten.

Eine mögliche Bauform eines solchen Proportionalventils ist in der DE 19900762 C2 beschrieben.

Soweit der Anmelderin bekannt ist, werden Proportionalventile bisher spezifisch für die einzelnen Anwendungsfälle hergestellt, mit jeweils speziell auf sie zugeschnittenen Komponenten. Dies kann dann beispielsweise zur Folge haben, dass die Proportionalventile, obwohl sie eigentlich für gleiche Maximaldrücke oder Maximaldurchflüsse ausgelegt sind, ein völlig unterschiedliches äußeres Erscheinungsbild aufweisen und sich sogar in der äußeren Baugröße unterscheiden, was die Handhabung seitens des Anwenders erschwert und auch die Kombinationsmöglichkeiten einschränkt. Zudem sind die Proportionalventile aufgrund der Vielzahl der erforderlichen unterschiedlichen Bauteile und der sich meist voneinander unterscheidenden Montagevorgänge relativ teuer in der Herstellung

Die DE 295 22 027 U beschreibt eine elektrische Stelleinheit, die insbesondere zum Antrieb eines hydraulischen Stetig- bzw. Proportionalventils dient. Sie umfasst einen Wegaufnehmer und eine Ansteuerelektronik, die in einem Gehäuse untergebracht sind, sowie einen Betätigungsmagnet, an den das Gehäuse angebaut ist. Die gesamte Stelleinheit kann auch für andere Ventilgattungen, beispielsweise für Druckventile, eingesetzt werden.

Aus ACHENBACH H-P: ^{"}EIN BAUKASTENSYSTEM FUER PNEUMATISCHE WEGEVENTILE" WERKSTATTTECHNIK, SPRINGER VERLAG, BERLIN, DE, Bd. 65, Nr. 1, 1975, Seiten 13-17, XP000700264 ISSN: 0304-4544 geht ein Baukastensystem für pneumatische Wegeventile hervor. Die Wegeventile sind in mehrere Baugruppen unterteilt, darunter ein Hauptventil und eine Vorsteuerung. Das Hauptventil kann zur Realisierung unterschiedlicher Bauformen aus einem identischen Gehäusetyp bestehen, in den in Abhängigkeit von der gewünschten Ventilfunktion unterschiedliche Teile eingebaut werden können. Die Vorsteuerung enthält einen Grundbaustein als Träger für eine unterschiedliche Anzahl von Magneten. Durch die Magnete ist eine vorgesteuerte Betätigung des Hauptventils möglich.

Es ist die Aufgabe der vorliegenden Erfindung, Maßnahmen vorzuschlagen, die eine einfache, kostengünstige und flexible Herstellung von Proportionalventilen unterschiedlicher Spezifikation ermöglichen.

Gelöst wird diese Aufgabe durch einen Baukasten zur Herstellung modular aufgebauter Proportionalventile für die Fluidsteuerung, die eine Arbeitseinheit bestehend aus einem Ventilmodul und einem daran angebauten Antriebsmodul für das Ventilmodul sowie ein seitlich an die Arbeitseinheit angebautes elektronisches Steuermodul für die Ansteuerung des Antriebsmoduls aufweisen,
- wobei für den selektiven Aufbau des Ventilmoduls Ventilgehäuse mindestens eines bestimmten standardisierten Typs sowie mehrere für den alternativen Einbau in ein jeweiliges Ventilgehäuse vorgesehene, jeweils ein bewegliches Ventilglied aufweisende Fluidsteuersätze unterschiedlichen Typs vorhanden sind, wobei die Ventilgehäuse jeweils ein Hohlraumsystem mit einer zur Aufnahme des jeweils ausgewählten Fluidsteuersatzes ausgebildeten standardisierten Aufnahmekammer und mit mehreren von der Aufnahmekammer ausgehenden, zur Außenfläche des Ventilgehäuses ausmündenden Ventilkanälen für die Zu- und Abfuhr des zu steuernden Fluides enthalten,
- wobei ferner für den selektiven Aufbau des Antriebsmoduls Antriebsgehäuse mindestens eines bestimmten standardisierten Typs sowie mehrere für den alternativen Einbau in das Antriebsgehäuse vorgesehene, dem Antrieb des Ventilgliedes des ausgewählten Fluidsteuersatzes dienende Antriebssätze unterschiedlichen Typs vorhanden sind,
- und wobei ferner für den selektiven Aufbau des elektronischen Steuermoduls mit Eingabe- und Anzeigemitteln vorgerüstete und/oder zur modularen Ausstattung mit Eingabe- und Anzeigemitteln ausgestaltete Steuermodulgehäuse mindestens eines bestimmten standardisierten Typs sowie mehrere für den alternativen Einbau in ein jeweiliges Steuermodulgehäuse vorgesehene Steuerelektroniken unterschiedlichen Typs vorhanden sind, wobei sich unter den Steuerelektroniken wenigstens eine für eine druckgeregelte Ansteuerung des Antriebsmoduls ausgelegte Druckregel-Steuerelektronik und/oder eine für eine durchflussgeregelte Ansteuerung des Antriebsmoduls ausgelegte Durchflussregel-Steuerelektronik und/oder eine für eine kombiniert druck- und durchflussgeregelte Ansteuerung des Antriebsmoduls ausgelegte Kombinations-Steuerelektronik befindet.

Auf diese Weise steht für die Herstellung von Proportionalventilen unterschiedlicher Funktionalität ein Baukasten mit einer großen Anzahl standardisierter bzw. übereinstimmender Komponenten zur Verfügung. Somit lässt sich unter Einsatz vieler Gleichteile ein äußerst variantenreicher Aufbau von Proportionalventilen bewerkstelligen, die nach außen hin ein einheitliches Erscheinungsbild mit übereinstimmenden Außenkonturen abgeben. Damit erreicht man eine bei Proportionalventilen bisher noch nicht dagewesene Vereinfachung in der Herstellung und Reduzierung der Gestehungskosten.

Vorteilhafte Weiterbildungen der Erfindung gehen aus den Unteransprüchen hervor.

Zweckmäßigerweise finden sich unter den im Baukasten enthaltenen, dem Antrieb des Ventilgliedes des Ventilmoduls dienenden Antriebssätzen sowohl Direkt-Antriebssätze als auch Indirekt-Antriebssätze. Mit den Direkt-Antriebssätzen kann die Stellung des Ventilgliedes direkt elektromechanisch beeinflusst werden, beispielsweise unter Einsatz elektrisch ansteuerbarer Proportionalmagnete oder sogenannter Linearmotoren. Durch Indirekt-Antriebssätze kann die Stellung des Ventilgliedes indirekt mittels eines vom Antriebssatz gesteuerten Steuerfluides beeinflusst werden, zu welchem Zweck die betreffenden Antriebssätze insbesondere über ein oder mehrere Vorsteuerventile verfügen, die sowohl als Schaltventile als auch als Stetigventile ausgeführt sein können.

Die Steuermodulgehäuse können bereits in ihrer Grundausstattung über Eingabe- und Anzeigemittel verfügen. Alternativ oder auch zusätzlich besteht jedoch die Möglichkeit, den Baukasten mit verschiedenen Eingabe- und Anzeigemodulen auszustatten, mit denen sich ein jeweiliges Steuermodulgehäuse wahlweise ausrüsten lässt. Beispielsweise können dadurch Eingabe- und Anzeigemodule zur Verfügung gestellt werden, die entweder über Leuchtdioden oder über ein Display als Anzeigemittel verfügen.

Unter den in die Ventilgehäuse einbaubaren Fluidsteuersätzen befinden sich zweckmäßigerweise sowohl Sitzventilsätze als auch Schieberventilsätze oder auch kombinierte Sitz- und Schieberventilsätze. Ist eine hohe Schaltgeschwindigkeit gefragt, greift man auf Fluidsteuersätze zurück, die über relativ harte Dichtungsmittel verfügen und dementsprechend reibungsarm bewegbar sind. Steht hingegen die gewünschte Abdichtqualität im Vordergrund, greift man auf Fluidsteuersätze mit weicheren Dichtungsmaterialien zurück.

Um Proportionalventile herstellen zu können, die entweder als Stand-alone-Varianten fungieren oder die als Bestandteile einer Ventilbaugruppe eingesetzt werden sollen, verfügt der Baukasten vorzugsweise über wenigstens zwei standardisierte Ventilgehäusetypen, die zwar in ihrer für die Unterbringung des ausgewählten Fluidsteuersatzes dienenden Aufnahmekammer identisch ausgeführt sind, sich jedoch im Verlauf der von der Aufnahmekammer ausgehenden Ventilkanäle unterscheiden.

Die einzelnen, durch den Baukasten zur Verfügung gestellten Steuerelektroniken können anwendungsspezifisch vorkonfektioniert sein. Kostengünstiger und variabler ist allerdings eine Ausführungsform, bei der der Baukasten über Standard-Steuerelektroniken verfügt, die zur Realisierung der jeweils gewünschten Steuerelektronik mit ebenfalls im Baukasten enthaltenen Elektronikkomponenten variabel bestückt werden können. Dadurch kann den unterschiedlichen Anforderungen Rechnung getragen werden, die für die Realisierung von Druckregel-Steuerelektroniken, Durchflussregel-Steuerelektroniken oder für beide Regelungsarten ausgelegten Kombinations-Steuerelektroniken gelten.

Unter Verwendung des erfindungsgemäßen Baukastens hergestellte Proportionalventile erweisen sich als Ventile, die aufgrund des modularen Aufbaus spezifisch den jeweiligen Einsatzbedingungen entsprechend ausgestattet sein können, sodass weder eine Überdimensionierung noch eine Unterdimensionierung an Funktionalität hingenommen werden muss und ein kostenoptimierter Aufbau vorliegt.

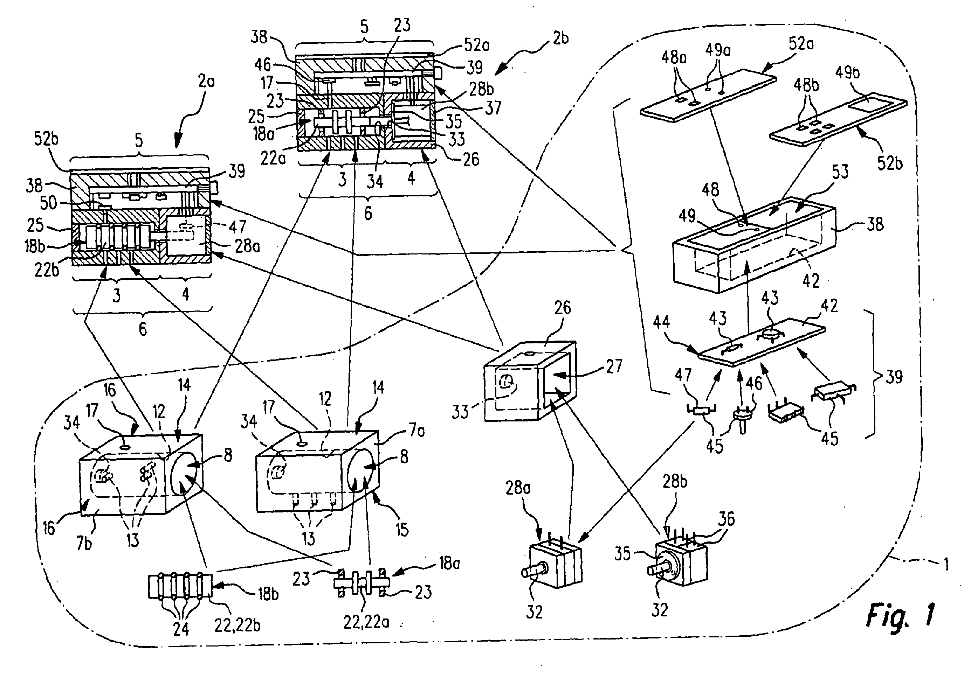

Die einzige Figur der beiliegenden Zeichnung (Figur 1) illustriert in schematischer Darstellung einen vorteilhaft aufgebauten erfindungsgemäßen Proportionalventil-Baukasten sowie exemplarisch zwei unter Verwendung des Baukastens herstellbare Proportionalventile. In der nun folgenden Beschreibung erfolgt eine detailliertere Beschreibung der Erfindung anhand des in der Figur 1 gezeigten Ausführungsbeispiels.

Die Figur 1 zeigt in dem strichpunktiert umrahmten Feld einen Baukasten 1 der erfindungsgemäßen Art in Verbindung mit einer exemplarisch ausgewählten Anzahl verschiedener Baukasten-Komponenten, auf deren Basis für die Fluidsteuerung geeignete Proportionalventile unterschiedlichster Funktionalität modular hergestellt werden können. Zwei Stück derart realisierbarer, sich in ihrer Funktionalität und auch in ihrer inneren Zusammensetzung unterscheidender Proportionalventile sind durch die Bezugsziffern 2a und 2b identifiziert.

Die durch den Baukasten 1 herstellbaren Proportionalventile sind untereinander identisch strukturiert. Beispielsgemäß bestehen sie jeweils aus einem Ventilmodul 3, einem Antriebsmodul 4 und einem elektronischen Steuermodul 5.

Das Ventilmodul 3 hat zweckmäßigerweise eine längliche Gestalt. Das Antriebsmodul 4 ist bevorzugt stirnseitig an das Ventilmodul 3 angebaut und bildet im angebauten Zustand zusammen mit dem Ventilmodul 3 eine als Arbeitseinheit 6 bezeichnete Baueinheit.

Das elektronische Steuermodul 5 ist zweckmäßigerweise längsseits an die Arbeitseinheit 6 angebaut. Es dient zur elektrischen Ansteuerung des Antriebsmoduls 4. Seine Länge entspricht beim Ausführungsbeispiel derjenigen der Arbeitseinheit 6, sodass das hergestellte Proportionalventil 2a, 2b insgesamt eine quaderförmige, stufenlose Außenkontur besitzt. Allerdings wäre es durchaus möglich, das Steuermodul 5 beispielsweise kürzer als die Arbeitseinheit 6 auszuführen.

Für den ausgewählten Aufbau des jeweiligen Ventilmoduls 3 enthält der Baukasten 1 beim Ausführungsbeispiel zwei standardisierte Typen von Ventilgehäusen 7a, 7b. Wie auch alle übrigen Baukasten-Komponenten sind die Ventilgehäusetypen 7a, 7b jeweils mehrfach vorhanden, in der Zeichnung jedoch nur einfach abgebildet. Beide Typen von Ventilgehäusen 7a, 7b haben jeweils einen standardisierten Aufbau, das heißt, sie sind standardmäßig für die Verwirklichung verschiedenster Proportionalventile einsetzbar, wobei sie jeweils noch mit typspezifischen Zusatzkomponenten ausgerüstet werden. Beiden Ventilgehäusen 7a, 7b ist eine identische Außenkontur gemeinsam sowie das Vorhandensein eines in ihrem Innern ausgebildeten Hohlraumsystems 8, das eine in Längsrichtung verlaufende Aufnahmekammer 12 beinhaltet, sowie mehrere von der Aufnahmekammer 12 ausgehende und zur Außenfläche des jeweiligen Ventilgehäuses 7a, 7b ausmündende Ventilkanäle 13, die bei fertiggestelltem Proportionalventil für die Zu- und Abfuhr des vom Ventil zu steuernden Fluides zuständig sind.

Die gewünschte Modularität wird allerdings auch dann schon erreicht, wenn der Baukasten über nur einen standardisierten Ventilgehäusetyp verfügt. Dieser lässt sich dann zur Realisierung eines Ventilmoduls 3 von Fall zu Fall selektiv mit Baukasten-Komponenten bestücken und mit den anderen Modulen 4, 5 kombinieren.

Innerhalb der Ventilgehäuse 7a bzw. 7b des gleichen Typs ist die Ausgestaltung identisch, das heißt standardisiert. Aber auch zwischen den Ventilgehäusen unterschiedlichen Typs liegt zweckmäßigerweise eine weitgehende Übereinstimmung vor. Neben der schon erwähnten Außenkontur stimmt zweckmäßigerweise auch die Ausgestaltung der Aufnahmekammer 12 überein. Unterschiede ergeben sich lediglich im Verlauf der Ventilkanäle 13, die bei dem einen Ventilgehäuse 7a zu der der Anbaufläche 14 für das elektronische Steuermodul 5 entgegengesetzten unteren Außenfläche 15 des Ventilgehäuses 7a ausmünden, während sie bei dem anderen Ventilgehäuse 7b zu zwei einander entgegengesetzten, seitwärts orientierten Außenflächen 16 führen. Auch eine Kombination aus seitlich und unten ausmündenden Ventilkanälen wäre möglich.

Die Ventilgehäuse 7a bzw. 7b könnten zusätzlich noch mit mindestens einem mit dem Hohlraumsystem 8 verbundenen Abgriffskanal ausgestattet sein, über den sich Druckmedium abgreifen lässt, das Versorgungszwecken dient, beispielsweise zur Versorgung eines später noch erläuterten Indirekt-Antriebssatzes 28b. Es wäre auch möglich, einen weiteren standardisierten Ventilgehäusetyp vorzusehen, der mit derartigen Abgriffskanälen ausgestattet ist.

Gemeinsam ist den Ventilgehäusen 7a, 7b ferner noch ein Druckabgriffskanal 17, der ausgehend vom Hohlraumsystem 8 zu der Anbaufläche 14 führt und dort ausmündet. Er kommuniziert innerhalb des Hohlraumsystems 8 mit einem der Ventilkanäle 13 oder einem mit einem der Ventilkanäle 13 verbundenen Längenabschnitt der Aufnahmekammer 12. Anstelle nur eines Druckabgriffkanals 17 könnten auch mehrere an unterschiedlichen Stellen mit dem Hohlraumsystem 8 kommunizierende Druckabgriffskanäle vorhanden sein, die dann ebenfalls an der Anbaufläche 14 ausmünden würden.

Der Baukasten 1 enthält des Weiteren mehrere Fluidsteuersätze 18a, 18b unterschiedlichen Typs, die jeweils so ausgebildet sind, dass sie in die Aufnahmekammer 12 jedes der vorhandenen Typen von Ventilgehäusen 7a, 7b einbaubar sind. Hauptkomponente der Fluidsteuersätze 18a, 18b ist ein im installierten Zustand relativ zum Ventilgehäuse 7 bewegbares Ventilglied 22, wobei allerdings jeder Fluidsteuersatz 18a, 18b auch noch weitere Komponenten besitzen kann.

Bei dem einen Fluidsteuersatz 18a des Ausführungsbeispiels handelt es sich um einen Sitzventilsatz. Sein Ventilglied 22 ist als Sitzventilglied 22a ausgebildet, das mit Ventilsitzkomponenten axial dichtend zusammenwirken kann, die ebenfalls Bestandteil des entsprechenden Fluidsteuersatzes 18a sind.

Bei dem anderen Fluidsteuersatz 18b handelt es sich um einen Schieberventilsatz, bei dem das Ventilglied 22 als Ventilschieber 22b ausgeführt ist, der axial beabstandet mit ringförmigen Dichtungen 24 bestückt ist. Letztere bewirken im Betrieb des zusammengebauten Proportionalventils eine radiale Abdichtung gegenüber der Innenfläche der Aufnahmekammer 12 oder gegenüber beispielsweise einer Führungshülse, die den Ventilschieber 22b koaxial umschließt und in die Aufnahmekammer 12 einsetzbar ist. Im letzteren Falle würde die Führungshülse ebenfalls einen Bestandteil des Schieberventilsatzes 18b darstellen.

Der Baukasten 1 kann bei Bedarf auch noch kombinierte Sitz- und Schieberventilsätze beinhalten.

In allen Fällen dienen die Fluidsteuersätze 18a, 18b dazu, in Abhängigkeit von der momentanen Axialposition des zugehörigen Ventilgliedes 22 die Verbindung zwischen den in die Aufnahmekammer 12 einmündenden Ventilkanälen 13 zu steuern. Über den Druckabgriffskanal 17 kann ein an einer bestimmten Stelle im Hohlraumsystem 8 herrschender Fluiddruck abgegriffen werden.

Um ein Ventilmodul 3 für ein Proportionalventil 2a, 2b herzustellen, wird das gewünschte Ventilgehäuse 7a bzw. 7b mit dem ausgewählten Fluidsteuersatz 18a, 18b bestückt. Um die Aufnahmekammer 12 nach dem Einsetzen des Fluidsteuersatzes 18a, 18b zu verschließen, kann der Baukasten 1 auch noch über geeignete Verschlussdeckel 25 verfügen, die untereinander identisch sind.

Auch das Antriebsmodul 4 der Proportionalventile 2a, 2b kann selektiv aus Komponenten des Baukastens 1 zusammengebaut werden. In diesem Zusammenhang enthält der Baukasten 1 Antriebsgehäuse 26 mindestens eines bestimmten standardisierten Typs sowie mehrere für den alternativen Einbau in einen Aufnahmeraum 27 des Antriebsgehäuses 26 geeignete Antriebssätze 28a, 28b, die dem Antrieb des Ventilgliedes 22 des jeweils mit dem Antriebsmodul 4 kombinierten Ventilmoduls 3 dienen.

Die Antriebssätze 28a, 28b enthalten jeweils ein beim Ausführungsbeispiel stangenförmiges Koppelglied 32, das im im Antriebsgehäuse 26 installierten Zustand durch eine Durchbrechung 33 in der Wand des Antriebsgehäuses 26 hindurchgreift. Im mit einem Ventilmodul 3 zusammengebauten Zustand taucht das Koppelglied 32 durch eine Wanddurchbrechung 34 des Ventilgehäuses 7a, 7b hindurch in die Aufnahmekammer 12 ein, um mit dem Ventilglied 22 des installierten Fluidsteuersatzes 18a, 18b antriebsmäßig zusammenzuwirken.

Innerhalb des Baukastens 1 stehen unterschiedliche Antriebssätze 28a, 28b zur Verfügung. Beim Ausführungsbeispiel handelt es sich um sich im Antriebsprinzip voneinander unterscheidende Typen von Antriebssätzen, und zwar zum einen um Direkt-Antriebssätze 28a sowie zum anderen um Indirekt-Antriebssätze 28b.

Die Direkt-Antriebssätze 28a ermöglichen eine elektromechanisch hervorgerufene Beeinflussung der Stellung des antriebsmäßig gekoppelten Ventilgliedes 22. Exemplarisch ist in Figur 1 als Vertreter eines Direkt-Antriebssatzes 28a ein elektrisch ansteuerbarer Proportionalmagnet gezeigt. Zusätzlich oder alternativ könnten beispielsweise auch elektrisch ansteuerbare Linearmotoren vorgesehen sein oder auch Schrittmotoren, Torquemotoren, Piezoantriebe usw. Bei derartigen Direkt-Antriebssätzen 28a ist die am Koppelglied 32 abgreifbare Kraft proportional zu der angelegten Spannung. Dadurch kann das Ventilglied durch entsprechende Variation der angelegten Spannung nach Wunsch positioniert werden.

Die Indirekt-Antriebssätze 28b bewirken eine Beeinflussung der Stellung des Ventilgliedes 22 indirekt mittels eines Steuerfluides. Das Steuerfluid, das dem Antriebsmodul 4 gesondert zugeführt wird oder das aus dem Ventilmodul 3 mittels geeigneter, oben schon erwähnter Abgriffskanäle abgezweigt wird, kann auf ein beispielsweise als Membran oder als Kolben ausgeführtes Stellglied 35 wirken, sodass eine Stellkraft hervorgerufen wird, die über das Koppelglied 32 auf das Ventilglied 2 einwirkt. Die der Fluidversorgung der installierten Indirekt-Antriebssätze 28b dienenden Kanäle des Antriebsmoduls und ggf. des Ventilmoduls sind in der Zeichnung nicht abgebildet.

Für die Steuerung der Fluidbeaufschlagung des Stellgliedes 35 sind bei dem in der Zeichnung abgebildeten Indirekt-Antriebssatz 28b zwei elektrisch betätigbare Vorsteuerventile 36 zuständig, beispielsweise Elektromagnetventile oder Piezoventile. Hier besteht überdies die Möglichkeit, sowohl Schaltventile als auch Stetigventile als Vorsteuerventile 36 zur Verfügung zu stellen, um entsprechend unterschiedlich ausgerüstete Indirekt-Antriebssätze bereitzustellen oder durch entsprechend modularen Aufbau von Fall zu Fall zusammenbauen zu können. Handelt es sich bei den Vorsteuerventilen 36 ausschließlich um Schaltventile, kann die Fluidbeaufschlagung des Stellgliedes 35 beispielsweise durch eine pulsweitenmodulierte Ansteuerung sehr feinfühlig vorgenommen werden.

Durch die Bereitstellung identisch ausgebildeter und somit auch hinsichtlich ihrer Außenkontur übereinstimmender Antriebsgehäuse 26 kann allein durch Bestückung mit unterschiedlichen Antriebssteuersätzen 28a, 28b die gewünschte Funktionalität für das erforderliche Antriebsmodul 4 bereitgestellt werden. Vergleichbar den Ventilgehäusen 7a, 7b kann auch in Verbindung mit dem Antriebsgehäuse 26 bei Bedarf ein Abschlussdeckel 37 als Baukasten-Komponente vorgesehen sein, der ein insbesondere abgedichtetes Verschließen des Aufnahmeraumes 27 nach dem Einsetzen des ausgewählten Antriebssatzes 28a, 28b ermöglicht.

Um einen variablen, modularen Aufbau des elektronischen Steuermoduls 5 zu ermöglichen, verfügt der Baukasten 1 über Steuermodulgehäuse 38 mindestens eines bestimmten standardisierten Typs sowie mehrere für den alternativen Einbau in jedes Steuermodulgehäuse 38 geeignete Steuerelektroniken 39 unterschiedlichen Typs. Das wie auch die anderen Komponenten mehrfach im Baukasten 1 enthaltene Steuermodulgehäuse 38 besitzt einen Einbauraum 42 für den Einbau der Steuerelektronik 39. Die Steuerelektronik 39 beinhaltet eine oder mehrere Platinen 42, die mit den erforderlichen Elektronikelementen 43 bestückt ist.

Die gewünschten unterschiedlichen Typen von Steuerelektroniken 39 könnten durch spezifisch vorkonfektionierte Steuerelektroniken zur Verfügung gestellt werden. Beim Ausführungsbeispiel geht man hier allerdings wiederum den Weg eines modularen und daher wesentlich flexibleren Aufbaus, indem man zur Realisierung der Steuerelektroniken unterschiedlichen Typs zum einen Standard-Steuerelektroniken 44 und zum anderen zur anwendungsspezifischen Bestückung dieser Standard-Steuerelektroniken 44 dienende Elektronikkomponenten 45 vorsieht. Man kann somit die untereinander identischen Standard-Steuerelektroniken 44 mit einer elektronischen Grundausstattung versehen, die bei allen durch den Baukasten 1 zur Verfügung stellbaren Steuerelektroniken 39 erforderlich sind und die man dann nur noch von Fall zu Fall durch ausgewählte Bestückung mit weiteren Elektronikkomponenten 45 wunschgemäß aufrüstet.

Über das jeweils nach Wahl zusammengesetzte elektronische Steuermodul 5 erfolgt die elektrische Ansteuerung des zugeordneten Antriebsmoduls 4 zum Zwecke der gewünschten Fluidsteuerung. Dabei ermöglicht der beispielhafte Baukasten 1 durch entsprechende Bestückung der Standard-Steuerelektroniken 44 die Realisierung von sowohl für eine druckgeregelte Ansteuerung des Antriebsmoduls ausgelegten Druckregel-Steuerelektroniken als auch von für eine durchflussgeregelte Ansteuerung des Antriebsmoduls ausgelegten Durchflussregel-Steuerelektroniken, als auch von für eine kombiniert druck- und durchflussgeregelte Ansteuerung des Antriebsmoduls ausgelegten Kombinations-Steuerelektroniken.

Bei der druckgeregelten Ausführung erfolgt eine Positionierung des Ventilgliedes 22 zum Zwecke der Einstellung eines gewünschten Druckes in demjenigen der Ventilkanäle 13, an den im Betrieb ein anzusteuernder Verbraucher angeschlossen wird. Bei durchflussgeregelter Ansteuerung erfolgt die Ventilgliedpositionierung zur Vorgabe eines bestimmten Durchflusses, auch als Strömungsrate bezeichnet. Die erwähnten Kombinations-Steuerelektroniken können eine Regelung hinsichtlich beider dieser Zustandsgrößen vornehmen. Für die Zusammensetzung eines sinnvollen Baukastens 1 sollten sich möglichst wenigstens zwei der vorgeschilderten drei Arten von Steuerelektroniken realisieren lassen.

Zur Realisierung eines druckgeregelten Proportionalventils enthält der Baukasten 1 geeignete Drucksensoren 46 zur Bestückung des dafür vorgesehenen Moduls oder einer Modulkomponente. Beim Ausführungsbeispiel sind Drucksensoren vorgesehen, die als SMD-Komponenten auf die Platine 42 aufbringbar sind, sodass man in diesem Falle den oder die erforderlichen Drucksensoren 46 direkt als Bestandteil der Druckregel-Steuerelektronik vorsehen kann. Dies gilt entsprechend bei einer Kombinations-Steuerelektronik. Wird das derart ausgerüstete Steuermodul 5 an die Arbeitseinheit 6 angesetzt, ergibt sich durch entsprechende Platzierung automatisch eine abgedichtete fluidische Verbindung zu dem an der Anbaufläche 14 ausmündenden Druckabgriffskanal 17 des Ventilmoduls 3, sodass der zu erfassende Druck dem Drucksensor zugeführt wird. Eine entsprechende Ausstattung liegt bei dem in Figur 1 rechts abgebildeten Proportionalventil 2b vor.

Zum Zwecke einer durchflussgeregelten Betriebsweise ist in vergleichbarer Weise eine Ausstattung eines Moduls oder einer Modulkomponente mit einem geeigneten Durchflusssensor möglich. Anstelle einer solchen direkten Durchflussregelung sehen die mit dem beispielsgemäßen Baukasten 1 herstellbaren Proportionalventile allerdings eine indirekte Durchflussregelung vor, indem als Regelgröße nicht der erfasste Durchfluss selbst, sondern die Position des Ventilgliedes 22 erfasst wird, die ein Maß für den jeweiligen Durchfluss darstellt. In der Elektronik wird dann den einzelnen Ventilgliedpositionen jeweils ein gewisser Durchflusswert zugeordnet, der vorher durch Berechnungen oder Versuche verifiziert wurde.

Für die Positionserfassung des Ventilgliedes 22 enthält der Baukasten 1 Hubsensoren 47, bei denen es sich praktisch um miniaturisierte Wegmesssysteme handelt. Beim Ausführungsbeispiel ist vorgesehen, den Hubsensor 47, sofern eine durchflussgeregelte Ansteuerung gewünscht ist, im oder am Antriebssatz des entsprechenden Antriebsgehäuses 26 zu installieren. Bei dem in Figur 1 links abgebildeten Proportionalventil 2a sitzt der Hubsensor 47 im zugeordneten Direkt-Antriebssatz 28a. Allerdings wäre auch eine andere Platzierung möglich, selbst im Steuermodulgehäuse 38 und dabei sogar als Elektronikkomponente 45 auf der Standard-Steuerelektronik 44.

Soll ein elektronisches Steuermodul 5, dessen Steuerelektronik 39 nicht zur Druckregelung ausgestattet ist, mit einer Arbeitseinheit 6 kombiniert werden, wird der nicht benötigte Druckabgriffskanal 17 durch geeignete Verschlussmittel 50, die ebenfalls Bestandteil des Baukastens 1 sind, verschlossen. Es kann sich bei den Verschlussmitteln 50 beispielsweise um Verschlussstopfen handeln.

Da alle Steuermodulgehäuse 38 des Baukastens 1 über identische Außenkonturen verfügen, ergibt sich letztlich für sämtliche mittels des Baukastens herstellbaren Proportionalventile 2a, 2b ein zumindest hinsichtlich der Außenkontur identisches äußeres Erscheinungsbild.

Die Steuermodulgehäuse 38 sind standardmäßig mit einer Minimalausstattung an Eingabe- und Anzeigemitteln 48, 49 vorausgerüstet. Sie stehen mit der installierten Steuerelektronik 39 in Verbindung und ermöglichen eine Befehlseingabe sowie eine Zustandsanzeige. Bei Bedarf können sie unmittelbarer Bestandteil der jeweiligen Steuerelektronik 39 sein.

Darüber hinaus sind die Steuermodulgehäuse 38 aber auch so ausgebildet, dass sie modular mit anderen Eingabe- und Anzeigemitteln ausrüstbar sind. In diesem Zusammenhang enthält der Baukasten 1 mehrere für die alternative Bestückung des Steuermodulgehäuses 38 ausgelegte kombinierte Eingabe- und Anzeigemodule 52a, 52b unterschiedlichen Typs. Der eine Typ von Eingabe- und Anzeigemodul 52a besitzt beispielsweise Leuchtdioden als Anzeigemittel 49a und ist mit einer geringen Anzahl von Tastschaltern als Eingabemittel 48a ausgestattet. Das andere Eingabe- und Anzeigemodul 52b enthält eine umfangreichere Eingabetastatur als Eingabemittel 48b und besitzt ein Display als Anzeigemittel 49b.

An der im installierten Zustand der Arbeitseinheit 6 entgegengesetzten Oberseite sind die Steuermodulgehäuse 38 mit einer Bestückungsfläche 53 versehen, die wahlweise mit einem der beiden Eingabe- und Anzeigemodule 52a, 52b bestückbar ist. Im derart bestückten Zustand werden die standardmäßig vorhandenen Eingabe- und Anzeigemittel 48, 49 abgedeckt und/oder funktionslos geschaltet. Man hat auf diese Weise insgesamt die Möglichkeit, elektronische Steuermodule 5 mit unterschiedlich komfortablen bzw. mit über unterschiedliche Funktionalitäten verfügenden Eingabe- und Anzeigemitteln auszustatten.

Eine Vorrüstung mit einer Minimalausstattung an Eingabe- und Anzeigemitteln 48, 49, wie beim Ausführungsbeispiel gezeigt, ist nicht zwingend. Man kann allein auf die modulare Bestückung zurückgreifen.

Die Eingabe- und Anzeigemodule 52a, 52b sind zweckmäßigerweise streifenartig ausgebildet, wobei sie folienartig dünn sein können. Ihre Befestigung an der Bestückungsfläche 53 erfolgt durch eine Klebeverbindung, sodass keine besonderen Befestigungsmittel benötigt werden. Durch die Klebeverbindung wird gleichzeitig eine Abdichtung bewirkt.

Die beiden abgebildeten Proportionalventile 2a, 2b setzen sich aus einer bestimmten Auswahl an Baukasten-Komponenten zusammen, was durch Verwendung entsprechender Bezugszeichen verdeutlicht wird. Es versteht sich, dass entsprechend dem flexiblen Baukastengedanken auf vielfältige andere Weise ausgestattete Proportionalventile realisierbar sind.

## Patentansprüche

1. Baukasten zur Herstellung modular aufgebauter Proportionalventile für die Fluidsteuerung, die eine Arbeitseinheit (6) bestehend aus einem Ventilmodul (3) und einem daran angebauten Antriebsmodul (4) für das Ventilmodul (3) sowie ein seitlich an die Arbeitseinheit (6) angebautes elektronisches Steuermodul (5) für die Ansteuerung des Antriebsmoduls (4) aufweisen,
- wobei für den selektiven Aufbau des Ventilmoduls (3) Ventilgehäuse (7a, 7b) mindestens eines bestimmten standardisierten Typs sowie mehrere für den alternativen Einbau in ein jeweiliges Ventilgehäuse (7a, 7b) vorgesehene, jeweils ein bewegliches Ventilglied (22) aufweisende Fluidsteuersätze (18a, 18b) unterschiedlichen Typs vorhanden sind, wobei die Ventilgehäuse (7a, 7b) jeweils ein Hohlraumsystem (8) mit einer zur Aufnahme des jeweils ausgewählten Fluidsteuersatzes (18a, 18b) ausgebildeten standardisierten Aufnahmekammer (12) und mit mehreren von der Aufnahmekammer (12) ausgehenden, zur Außenfläche des Ventilgehäuses (7a, 7b) ausmündenden Ventilkanälen (13) für die Zu- und Abfuhr des zu steuernden Fluides enthalten,
- wobei ferner für den selektiven Aufbau des Antriebsmoduls (6) Antriebsgehäuse (26) mindestens eines bestimmten standardisierten Typs sowie mehrere für den alternativen Einbau in das Antriebsgehäuse (26) vorgesehene, dem Antrieb des Ventilgliedes (22) des ausgewählten Fluidsteuersatzes (18a, 18b) dienende Antriebssätze (28a, 28b) unterschiedlichen Typs vorhanden sind,
- und wobei ferner für den selektiven Aufbau des elektronischen Steuermoduls (5) mit Eingabe- und Anzeigemitteln (48, 49) vorgerüstete und/oder zur modularen Ausstattung mit Eingabe- und Anzeigemitteln (48a, 49a; 48b, 49b) ausgestaltete Steuermodulgehäuse (38) mindestens eines bestimmten standardisierten Typs sowie mehrere für den alternativen Einbau in ein jeweiliges Steuermodulgehäuse (38) vorgesehene Steuerelektroniken (39) unterschiedlichen Typs vorhanden sind, wobei sich unter den Steuerelektroniken (39) wenigstens eine für eine druckgeregelte Ansteuerung des Antriebsmoduls (4) ausgelegte Druckregel-Steuerelektronik und/oder eine für eine durchflussgeregelte Ansteuerung des Antriebsmoduls (4) ausgelegte Durchflussregel-Steuerelektronik und/oder eine für eine kombiniert druck- und durchflussgeregelte Ansteuerung des Antriebsmoduls (4) ausgelegte Kombinations-Steuerelektronik befindet.

2. Baukasten nach Anspruch 1, **dadurch gekennzeichnet, dass** sich unter den Antriebssätzen sowohl für eine direkte e-lektro-mechanische Beeinflussung der Stellung des Ventilgliedes (22) ausgelegte Direkt-Antriebssätze (28a) als auch für eine indirekt mittels eines Steuerfluides bewirkte Beeinflussung der Stellung des Ventilgliedes (22) ausgelegte Indirekt-Antriebssätze (28b) befinden.

3. Baukasten nach einem der Ansprüche 1 oder 2, **dadurch gekennzeichnet, dass** die Direkt-Antriebssätze (28a) wenigstens teilweise einen elektrisch ansteuerbaren Proportionalmagnet enthalten.

4. Baukasten nach einem der Ansprüche 1 bis 3, **dadurch gekennzeichnet, dass** die Direkt-Antriebssätze (28a) wenigstens teilweise einen elektrisch ansteuerbaren Linearmotor enthalten.

5. Baukasten nach einem der Ansprüche 1 bis 4, **dadurch gekennzeichnet, dass** die Indirekt-Antriebssätze (28b) wenigstens teilweise mindestens ein elektrisch ansteuerbares Vorsteuerventil (36) aufweisen.

6. Baukasten nach Anspruch 5, **dadurch gekennzeichnet, dass** wenigstens ein Vorsteuerventil (36) als Schaltventil oder als Stetigventil ausgeführt ist.

7. Baukasten nach einem der Ansprüche 1 bis 6, **dadurch gekennzeichnet, dass** mehrere für die alternative Bestückung des Steuermodulgehäuses (38) ausgelegte, mit unterschiedlichen Arten von Eingabe- und Anzeigemitteln (48a, 49a; 48b, 49b) ausgestattete Eingabe- und Anzeigemodule (52a, 52b) unterschiedlichen Typs vorhanden sind.

8. Baukasten nach Anspruch 7, **dadurch gekennzeichnet, dass** die Eingabe- und Anzeigemodule (52a, 52b) streifenartig ausgebildet und zum Aufkleben auf eine dafür vorgesehene Bestückungsfläche (53) des Steuermodulgehäuses (38) vorgesehen sind.

9. Baukasten nach einem der Ansprüche 1 bis 8, **dadurch gekennzeichnet, dass** sich unter den Fluidsteuersätzen Sitzventilsätze (18a) und/oder Schieberventilsätze (18b) und/oder kombinierte Sitz- und Schieberventilsätze befinden.

10. Baukasten nach einem der Ansprüche 1 bis 9, **dadurch gekennzeichnet, dass** die der Zufuhr und Abfuhr des zu steuernden Fluides dienenden Ventilkanäle (13) bei einem standardisierten Typ der Ventilgehäuse (7a) an der der Anbaufläche (14) für das elektronische Steuermodul (5) entgegengesetzten unteren Außenfläche (15) des Ventilgehäuses (7a) ausmünden.

11. Baukasten nach einem der Ansprüche 1 bis 10, **dadurch gekennzeichnet, dass** die der Zufuhr und Abfuhr des zu steuernden Fluides dienenden Ventilkanäle (13) bei einem standardisierten Typ der Ventilgehäuse (7b) an seitwärts orientierten Außenflächen (16) des Ventilgehäuses (7b) ausmünden.

12. Baukasten nach einem der Ansprüche 1 bis 11, **gekennzeichnet durch** bei der Druckregelung einsetzbare Drucksensoren (46) zur fallweisen Bestückung mindestens eines Moduls oder einer Modulkomponente (39).

13. Baukasten nach einem der Ansprüche 1 bis 12, **dadurch gekennzeichnet, dass** die Druckregel-Steuerelektroniken und die Kombinations-Steuerelektroniken jeweils mindestens einen Drucksensor (46) enthalten und dass die Ventilgehäuse (7a, 7b) jeweils mindestens einen von dem Hohlkammersystem (8) ausgehenden und zu der für den Anbau des elektronischen Steuermoduls (5) vorgesehenen Anbaufläche (14) führenden Druckabgriffskanal (17) aufweisen, der bei Bestückung des Ventilgehäuses (7a, 7b) mit einem durch Ausstattung mit einer entsprechenden Steuerelektronik (39) zur Druckregelung geeigneten elektronischen Steuermodul (5) mit dessen Drucksensor (46) in Verbindung steht.

14. Baukasten nach einem der Ansprüche 1 bis 13, **gekennzeichnet durch** zur Durchflussregelung einsetzbare Hubsensoren (47) zur fallweisen Bestückung mindestens eines Moduls oder einer Modulkomponente (28a).

15. Baukasten nach einem der Ansprüche 1 bis 14, **dadurch gekennzeichnet, dass** zur Realisierung der Steuerelektroniken (39) unterschiedlichen Typs Standard-Steuerelektroniken (44) und zu deren anwendungsspezifischer Bestückung dienende Elektronikkomponenten (45) vorhanden sind.

16. Baukasten nach Anspruch 15, **dadurch gekennzeichnet, dass** sich unter den Elektronikkomponenten (45) unter anderem Drucksensoren (46) und/oder Hubsensoren (47) befinden.

17. Baukasten nach einem der Ansprüche 1 bis 16, **dadurch gekennzeichnet, dass** das Antriebsmodul (4) zum stirnseitigen Anbau an das Ventilmodul (3) und das elektronische Steuermodul (5) zum Anbau längsseits an die aus Antriebsmodul (4) und Ventilmodul (3) bestehende Arbeitseinheit (6) ausgebildet ist.

18. Baukasten nach einem der Ansprüche 1 bis 17, **dadurch gekennzeichnet, dass** die standardisiert aufgebauten Ventilgehäuse (7a, 7b), Antriebsgehäuse (26) und Steuermodulgehäuse (38) untereinander jeweils über identische Außenkonturen verfügen.

19. Proportionalventil für die Fluidsteuerung, hergestellt unter Verwendung des Baukastens (1) gemäß einem der Ansprüche 1 bis 18.

## Claims

1. Modular kit for the production of proportional valves of modular design for fluid control, which comprise an operating unit (6) comprising a valve module (3) and a drive module (4) for and fitted to the valve module (3), and which further comprise an electronic control module (5) fitted to the operating unit (6) for activating the operating unit (6),
- wherein, for the selective construction of the valve module (3), valve housings (7a, 7b) of at least one defined standardised type and a plurality of fluid control sets (18a, 18b) of different types, each having a movable valve member (22) and being designed for alternative installation into a valve housing (7a, 7b), are provided, each valve housing (7a, 7b) comprising a cavity system (8) with a standardised location chamber (12) designed for the location of the selected fluid control set (18a, 18b) and a plurality of valve passages (13) extending from the location chamber (12) to the outer surface of the valve housing (7a, 7b) for the supply and discharge of the fluid to be controlled,
- wherein further, for the selective construction of the drive module (6), drive housings (26) of at least one defined standardised type and a plurality drive sets (28a, 28b) of different types, each being designed for driving the valve member (22) of the selected fluid control set (18a, 18b) and for alternative installation into the drive housing (26), are provided,
- and wherein further, for the selective construction of the electronic control module (5), control module housings (38) of at least one defined standardised type, which are fitted with input and display means (48, 49) and/or suitable for being fitted with modular input and display means (48a, 49a; 48b, 49b), and a plurality of electronic control units (39) of different types, each being designed for alternative installation into a control module housing (38), are provided, said electronic control units (39) including at least one electronic pressure control unit designed for the pressure-controlled activation of the drive module (4) and/or at least one electronic flow control unit designed for the flow-controlled activation of the drive module (4) and/or a combined electronic control unit designed for the combined pressure- and flow-controlled activation of the drive module (4).

2. Modular kit according to claim 1, **characterised in that** the drive sets include both direct drive sets (28a) designed for the direct electro-mechanical manipulation of the position of the valve member (22) and indirect drive sets (28b) for the indirect manipulation of the position of the valve member (22) by means of a control fluid.

3. Modular kit according to claim 1 or 2, **characterised in that** the direct drive sets (28a) at least in part comprise a proportional solenoid capable of electric activation.

4. Modular kit according to any of claims 1 to 3, **characterised in that** the direct drive sets (28a) at least in part comprise a linear motor capable of electric activation.

5. Modular kit according to any of claims 1 to 4, **characterised in that** the indirect drive sets (28b) at least in part comprise at least one pilot valve (36) capable of electric activation.

6. Modular kit according to claim 5, **characterised in that** at least one pilot valve (36) is designed as an on-off valve or an infinite-position valve.

7. Modular kit according to any of claims 1 to 6, **characterised in that** a plurality of input and display modules (52a, 52b) of different types designed for alternative mounting on the control module housing (38) and fitted with different types of input and display means (48a, 49a; 48b, 49b) are provided.

8. Modular kit according to claim 7, **characterised in that** the input and display modules (52a, 52b) are strip-like in design and suitable for bonding to a purpose-designed mounting surface (53) of the control module housing (38).

9. Modular kit according to any of claims 1 to 8, **characterised in that** the fluid control sets include seated valve sets (18a) and/or spool valve sets (18b) and/or combined seated and spool valve sets.

10. Modular kit according to any of claims 1 to 9, **characterised in that** the valve passages (13) for the supply and discharge of the fluid to be controlled terminate, in a standardised type of valve housing (7a), at the lower outer surface (15) of the valve housing (7a) opposite the mounting surface (14) for the electronic control module (5).

11. Modular kit according to any of claims 1 to 10, **characterised in that** the valve passages (13) for the supply and discharge of the fluid to be controlled terminate, in a standardised type of valve housing (7b), at laterally oriented outer surfaces (16) of the valve housing (7b).

12. Modular kit according to any of claims 1 to 11, **characterised by** pressure sensors (46) usable for pressure control and designed for optional fitting to at least one module or module component (39).

13. Modular kit according to any of claims 1 to 12, **characterised in that** each of the electronic pressure control units and of the combined electronic control units comprises at least one pressure sensor (46), and **in that** each valve housing (7a, 7b) comprises at least one pressure tapping passage (17) extending from the cavity system (8) to the mounting surface (14) provided for the electronic control module (5), which, if the valve housing (7a, 7b) is fitted with an electronic control module (5) made suitable for pressure control by the provision of an appropriate electronic control unit, it connected to the pressure sensor (46) thereof.

14. Modular kit according to any of claims 1 to 13, **characterised by** stroke sensors (47) usable for flow control and designed for optional fitting to at least one module or module component (28a).

15. Modular kit according to any of claims 1 to 14, **characterised in that** standard electronic control units (44) and application-specific electronic components (45) are provided to implement electronic control units (39) of different types.

16. Modular kit according to claim 15, **characterised in that** the electronic components (45) include pressure sensors (46) and/or stroke sensors (47).

17. Modular kit according to any of claims 1 to 16, **characterised in that** the drive module (4) is designed for fitting to the end face of the valve module (3) and the electronic control module (5) is designed for fitting along the operating unit (6) comprising the drive module (4) and the valve module (3).

18. Modular kit according to any of claims 1 to 17, **characterised in that** the standardised valve housings (7a, 7b), drive housings (26) and control module housings (38) have identical external contours.

19. Proportional valve for fluid control, produced using the modular kit (1) according to any of claims 1 to 18.

## Revendications

1. Ensemble modulaire pour la réalisation de vannes proportionnelles à structure modulaire pour la commande de fluides, qui comportent une unité de travail (6) formée par un module de vanne (3) et un module d'actionnement (4) pour le module de vanne (3) assemblé à ce dernier, ainsi qu'un module de commande (5) électronique, qui est assemblé sur le côté de l'unité de travail (6) et est destiné à activer le module d'actionnement (4),
- dans lequel, pour le montage sélectif du module de vanne (3), il est prévu des boîtiers de vanne (7a, 7b) dans au moins un type standardisé déterminé, ainsi que plusieurs groupes de commande de fluide (18a, 18b) de type différent, prévus pour le montage sélectif dans un boîtier de vanne (7a, 7b) respectif et munis chacun d'un organe de vanne (22) mobile, les boîtiers de vanne (7a, 7b) contenant chacun un système de cavité (8) avec un logement (12) de forme standardisée, destiné à recevoir le groupe de commande de fluide (18a, 18b) respectivement choisi, et avec plusieurs canaux de vanne (13) pour l'admission et l'évacuation du fluide à commander, partant du logement (12) et débouchant vers la face extérieure du boîtier de vanne (7a, 7b),
- dans lequel, en outre, pour le montage sélectif du module d'actionnement (4), il est prévu des boîtiers d'actionnement (26) dans au moins un type standardisé déterminé, ainsi que plusieurs groupes d'actionnement (28a, 28b) de type différent, prévus pour le montage sélectif dans un boîtier d'actionnement (26) et utilisés pour l'actionnement de l'organe de vanne (22) du groupe de commande de fluide (18a, 18b) sélectionné,
- et dans lequel, en outre, pour le montage sélectif du module de commande (5) électronique, il est prévu des boîtiers de module de commande (38) dans au moins un type standardisé déterminé, pré-équipés de moyens d'entrée et d'affichage (48, 49) et/ou munis de moyens d'entrée et d'affichage (48a, 49a ; 48b, 49b) en vue d'un équipement modulaire, ainsi que plusieurs électroniques de commande (39) de type différent prévues pour le montage sélectif dans un boîtier de module de commande (38) respectif, parmi les électroniques de commande (39) figurant au moins une électronique de commande du réglage de la pression, conçue pour une activation régulée en pression du module d'actionnement (4) et/ou une électronique de commande du réglage du débit, conçue pour une activation à flux régulé du module d'actionnement (4) et/ou une électronique de commande combinée, conçue pour une activation combinée régulée en pression et en débit du module d'actionnement (4).

2. Ensemble modulaire selon la revendication 1, **caractérisé en ce que** parmi les groupes d'actionnement figurent des groupes d'actionnement direct (28a) conçus pour influer directement par voie électromécanique sur la position de l'organe de vanne (22), de même que des groupes d'actionnement indirect (28b) conçus pour influer indirectement, au moyen d'un fluide de commande, sur la position de l'organe de vanne (22).

3. Ensemble modulaire selon la revendication 1 ou 2, **caractérisé en ce que** les groupes d'actionnement direct (28a) comportent au moins partiellement un aimant proportionnel activable par voie électrique.

4. Ensemble modulaire selon l'une des revendications 1 à 3, **caractérisé en ce que** les groupes d'actionnement direct (28a) comportent au moins partiellement un moteur linéaire activable par voie électrique.

5. Ensemble modulaire selon l'une des revendications 1 à 4, **caractérisé en ce que** les groupes d'actionnement indirect (28b) comportent au moins partiellement une vanne pilote (36) activable par voie électrique.

6. Ensemble modulaire selon la revendication 5, **caractérisé en ce qu'**au moins une vanne pilote (36) est réalisée sous forme de vanne commutable ou sous forme de vanne permanente.

7. Ensemble modulaire selon l'une des revendications 1 à 6, **caractérisé en ce qu'**il est prévu plusieurs modules d'entrée et d'affichage (52a, 52b) de type différent, conçus pour l'équipement sélectif du boîtier de module de commande (38) et munis de différents types de moyens d'entrée et d'affichage (48a, 49a ; 48b, 49b).

8. Ensemble modulaire selon la revendication 7, **caractérisé en ce que** les modules d'entrée et d'affichage (52a, 52b) sont réalisés sous forme de bande et sont prévus pour être collés sur une surface réceptrice (53) prévue à cet effet sur le boîtier du module de commande (38).

9. Ensemble modulaire selon l'une des revendications 1 à 8, **caractérisé en ce que** parmi les groupes de commande des fluides figurent des groupes de vannes à siège (18a) et/ou des groupes de vannes à passage direct (18b) et/ou des groupes combinés de vannes à siège et de vannes à passage direct.

10. Ensemble modulaire selon l'une des revendications 1 à 9, **caractérisé en ce que** les canaux de vanne (13), destinés à l'admission et à l'évacuation du fluide à commander, débouchent, dans un type standard de boîtier de vanne (7a), sur la face extérieure inférieure (15) du boîtier de vanne (7a), opposée à la face d'assemblage (14) pour le module de commande (5) électronique.

11. Ensemble modulaire selon l'une des revendications 1 à 10, **caractérisé en ce que** les canaux de vanne (13), destinés à l'admission et à l'évacuation du fluide à commander, débouchent, dans un type standardisé de boîtier de vanne (7b), sur des faces extérieures (16) du boîtier de vanne (7b), orientées vers le côté.

12. Ensemble modulaire selon l'une des revendications 1 à 11, **caractérisé par** des capteurs de pression (46), aptes à être utilisés pour le réglage de la pression, en vue de l'équipement éventuel d'au moins un module ou d'un composant modulaire (39).

13. Ensemble modulaire selon l'une des revendications 1 à 12, **caractérisé en ce que** les électroniques de commande du réglage de la pression et les électroniques de commande combinées comportent chacune au moins un capteur de pression (46) et **en ce que** les boîtiers de vanne (7a, 7b) comportent chacun au moins un canal de prélèvement de pression (17), qui part du système de cavité (8) et mène vers la surface d'assemblage (14) prévue pour l'assemblage du module de commande (5) électronique, et qui, lors de l'équipement du boîtier de vanne (7a, 7b), est relié au capteur de pression (46) du module de commande (5) électronique qui, moyennant l'installation d'une électronique de commande (39) correspondante, est apte à régler la pression.

14. Ensemble modulaire selon l'une des revendications 1 à 13, **caractérisé par** des capteurs de déplacement (47), aptes à être utilisés pour le réglage du débit, en vue de l'équipement éventuel d'au moins un module ou d'un composant modulaire (28a).

15. Ensemble modulaire selon l'une des revendications 1 à 14, **caractérisé en ce que**, pour la réalisation des électroniques de commande (39), il est prévu différents types d'électroniques de commande standard (44) et des composants électroniques (45) destinés à équiper ceux-ci de manière spécifique à chaque application.

16. Ensemble modulaire selon la revendication 15, **caractérisé en ce que** parmi les composants électroniques (45) figurent, entre autres, des capteurs de pression (46) et/ou des capteurs de déplacement (47).

17. Ensemble modulaire selon l'une des revendications 1 à 16, **caractérisé en ce que** le module d'actionnement (4) est conçu pour être assemblé du côté frontal au module de vanne (3) et le module de commande (5) électronique est conçu pour être assemblé sur le côté longitudinal de l'unité de travail (6) formée par le module d'actionnement (4) et le module de vanne (3).

18. Ensemble modulaire selon l'une des revendications 1 à 17, **caractérisé en ce que** les boîtiers de vanne (7a, 7b), les boîtiers d'actionnement (26) et les boîtiers de module de commande (38), tous de structure standardisé, comportent entre eux respectivement des contours extérieurs identiques.

19. Vanne proportionnelle pour la commande de fluides, réalisée moyennant l'utilisation de l'ensemble modulaire (1) selon l'une des revendications 1 à 18.
